(19) Europäisches Patentamt / European Patent Office / Office européen des brevets

(11) **EP 3 491 037 B1**

(12) **EUROPEAN PATENT SPECIFICATION**

(45) Date of publication and mention
of the grant of the patent:
**28.10.2020 Bulletin 2020/44**

(51) Int Cl.:
*C08G 18/08* (2006.01)     *C08F 290/06* (2006.01)
*C08F 220/18* (2006.01)

(21) Application number: **17748427.6**

(86) International application number:
**PCT/EP2017/068442**

(22) Date of filing: **21.07.2017**

(87) International publication number:
**WO 2018/019708 (01.02.2018 Gazette 2018/05)**

(54) **STABILISER FOR POLYOLEFIN-IN-POLYETHER POLYOL DISPERSIONS**

STABILISATOR FÜR POLYOLEFIN-IN-POLYETHERPOLYOL-DISPERSIONEN

STABILISANT DESTINÉ À DES DISPERSIONS DE POLYOLÉFINE DANS UN POLYOL DE POLYÉTHER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.07.2016 PCT/CN2016/091897**

(43) Date of publication of application:
**05.06.2019 Bulletin 2019/23**

(73) Proprietor: **BASF SE**
**67056 Ludwigshafen am Rhein (DE)**

(72) Inventors:
• **KOENIG, Christian**
**67056 Ludwigshafen (DE)**
• **THIELBEER, Frank**
**49448 Lemfoerde (DE)**
• **FU, Chuan Long**
**200137 Shanghai (CN)**

(74) Representative: **BASF IP Association**
**BASF SE**
**GBI-C006**
**67056 Ludwigshafen (DE)**

(56) References cited:
**WO-A1-2005/003200     US-A1- 2011 065 840**
**US-A1- 2014 093 668**

## Description

The invention relates to a stabiliser for polyolefin-in-polyether polyol dispersions, a process for preparing this stabiliser, its use, the dispersion, its preparation and use for preparing polyurethanes.

EP-A 1 942 122 relates to the dispersion of a preformed polymer in a polyol. A preferred stabiliser for use in PE polymer polyols is a reaction product of a maleic anhydride functionalised PE wax and a monoamino polyol, wherein imide linkages form between the reactants. One example of such a preferred stabiliser is the reaction of CERAMER® 5005 wax with JEFFAMINE® polyamine XTJ-507.

In fact, the stabiliser is an imide reaction product of a maleic anhydride functionalised polyethylene wax and a monoamine polyol.

The disadvantage of using this stabiliser is the necessity to functionalise the polyethylene with ethyl acrylate or vinyl acetate.

EP-A 0 957 130 relates to a process for preparing polyisocyanate-polyaddition products. A polyethylene powder is added to a polyether polyol formulation and not prepared separately in a polyether polyol.

US 9,163,099 relates to polybutadiene-modified polymer polyols, foams prepared from polybutadiene-modified polymer polyols, and processes for the production thereof. A preformed stabiliser is employed which is an intermediate obtained by reacting a macromer containing reactive unsaturation with monomers like acrylonitrile, styrene, methyl methacrylate, optionally in a diluent or solvent, which can be a polyether polyol. It is preferred that polybutadiene polyols are not present in the polymer polyols. According to the examples, a propylene oxide adduct of sorbitol containing a 16 % ethylene oxide cap and/or of glycerine containing an ethylene oxide cap is reacted with TMI and MDI.

Polybutadiene is employed in polymer polyols to reduce VOC emissions and improve the flame retardancy of the PU foam. The polybutadiene takes part in the radical polymerization process.

WO 2015/165878 relates to a stabiliser for polymer polyol production processes. The stabiliser is based on a macromer which is a product obtained by reaction of a three-functional polyether polyol or a six-functional polyol with 1,1-dimethyl meta isopropenyl benzyl isocyanate (TMI). The stabiliser is used for stabilizing styrene-acrylonitrile copolymer dispersions.

US 2011/0065840 relates to a process for preparing polyol dispersions. These polyol dispersions may comprise a copolymer, an additional polymer like polyethylene and a polyol. The co-polymer can be obtained by free-radical addition polymerization of a polyetherol macromer with stearyl acrylate and optionally styrene, butyl acrylate or acrylonitrile. There is no mention of a polyether polyol component for this copolymer C. In the final dispersion, the amount of reaction product or copolymer C is only 0.34 g per 11.285 g polyol or 10.875 g polyol, or 0.75 g of copolymer C with 11.285 g polyol or 10.875 g polyol.

The object underlying the present invention is to provide a stabiliser for stabilizing polyolefin-in-polyether polyol dispersions, which lead to a long-time stability of the dispersions with finely divided polyolefin particles.

A polyolefin is any of a class of polymers produced from a simple olefin (also called an alkene with the general formula $C_nH_{2n}$) as a monomer. For example, polyethylene is the polyolefin produced by polymerizing the olefin ethylene. Polypropylene is another common polyolefin which is made from the olefin propylene. Polyisobutylene is another common polyolefin which is made from the olefin isobutylen. Polybutadiene is another common polyolefin which is made from the olefin butadiene.

This invention describes, inter alia, the synthesis of a stabiliser obtained by free radical polymerization of a macromer which is used for a free radical polymerization. This product is used in a melt emulsification process in order to obtain polymer polyol products which contain polyolefins as a dispersed phase.

One aspect of this invention is to synthesise stabilisers that effectively stabilise dispersions of polyolefins in a polyether phase. It could be shown that dispersions obtained by using these stabilisers obtained by this method have small particle sizes and offer an improved long-time stability.

The composition of the inventive stabilisers is important for the stabilizing effect.

In this disclosure, the term "stabiliser" refers, in a general sense, to a chemical compound.

The stabiliser is a compound that is assumed to stabilise dispersions of polyolefins in a polyether polyol phase, and thus is assumed to stabilise polymer polyol dispersions. In particular, the stabiliser is assumed to stabilise polymer polyol dispersions obtained by melt emulsification processes.

In particular, the inventive stabiliser is appropriate for the stabilization of polymer polyol dispersions produced by melt emulsification.

In this context, the term "melt emulsification" refers to a process which involves only physical mixing of the components, rather than a chemical reaction.

The term melt emulsification is defined in WO2009/155427 as follows:
Another way of dispersing the previously-formed polymer is to melt it, and then blend the molten polymer with the polyol under shear. The shearing action breaks the molten polymer into small droplets which become dispersed in the polyol phase. This process is described in US patent No. 6,623,827. That patent describes a process wherein a previously-formed polymer is melted in an extruder, mixed with a surfactant and a polyether polyol, and subsequently mixed with more of the polyether polyol. The mixture is then cooled to solidify the particles.

The term stabiliser may be defined as a compound obtained by reacting a macromer containing reactive unsaturation with $C_{4-30}$-alkyl(meth)acrylate and optionally styrene and acrylonitrile in a polyether polyol, wherein optionally a chain transfer agent can be used. The inventive stabilisers are used for preparing polymer polyols containing preferably small particles with D50 of below 25 $\mu$m, more preferably below 10 $\mu$m, most preferably below 5 $\mu$m, via a melt emulsification process and should be able to stabilise the polymer polyol dispersion for a prolonged period of time (prevention of phase separation).

The stabilizing effect is determined by storing samples for a prolonged time and visually inspecting them before and after the storage period of, usually, six months. When no precipitation has been formed at the bottom of the sample container (i.e. no phase separation), the sample is considered to be stable and, thus, the stabiliser works.

The inventive stabilisers are inherently different from preformed stabilisers used for standard graft processes via free radical polymerization. Requirements and challenges for the process to form and stabilise polymer polyol dispersions via radical polymerization are fundamentally different.

The object is achieved according to the present invention by a stabiliser, comprising the reaction product of at least one macromer with at least one C4-30-alkyl(meth)acrylate in at least one polyether polyol 1 in the presence of at least one free radical polymerisation catalyst and optionally at least one chain transfer agent, the at least one macromer being at least one molecule which comprises in its structure one or more polymerisable double bonds, able to copolymerise with C4-30-alkyl(meth)acrylates and which furthermore comprises in its structure one or more hydroxyl-terminated polyether chains, wherein the weight ratio of the reaction product of at least one macromer with at least one C4-30-alkyl(meth)acrylate to the at least one polyether polyol 1 is in the range of from 20:80 to 80:20, wherein the stabiliser has a particle size D50 smaller than 0.5 $\mu$m as determined by static laser diffraction using a Mastersizer 2000 (Malvern Instruments Ltd) after dilution of the sample with isopropanol in order to obtain an optical concentration suitable for the measurement.

The object is furthermore achieved by a process for preparing the stabiliser comprising reacting the at least one macromer with at least one $C_{4-30}$-alkyl(meth)acrylate in at least one polyether polyol 1 in the presence of a free radical polymerisation catalyst and optionally at least one chain transfer agent.

A preferred chain transfer agent is a thiol like dodecane thiol, which can be employed in the usual amounts.

The object is furthermore achieved by the use of this stabiliser for the stabilization of polymer polyol dispersions produced by melt emulsification.

The invention furthermore relates to a process for preparing a dispersion of at least one polyolefin in at least one polyol 3, comprising at least one stabiliser as defined above, comprising the melt emulsification of the at least one polyolefin, the at least one polyol 3 and the at least one stabiliser.

Polyol 3 can be freely chosen. It is preferably selected from the group of polyetherols, specifically polyether polyols, polyesterols, polycarbonate polyols, polyetheramines, hydroxyl-functionalised fatty acid derivatives and alkoxylation products of the before-mentioned groups and mixtures thereof.

Polyol 3 can correspond to polyether polyol 1 and/or polyether polyol 2.

The invention furthermore relates to a process for preparing a polyurethane, comprising preparing a dispersion of at least one polyolefin in at least one polyol 3, comprising at least one stabiliser as defined above, comprising the melt emulsification of the at least one polyolefin, the at least one polyol 3 and the least one stabiliser, mixing the dispersion with polyisocyanates and, if appropriate, one or more of further compounds having hydrogen atoms which are reactive towards isocyanates, chain extenders and/or crosslinkers, catalysts, blowing agents and further additives, and reacting the mixture to form the polyurethane.

Polyurethanes obtained by dispersions produced by polyols using this process have improved hydrolytic stability and reduced moisture uptake.

The stabiliser according to the present invention comprises the reaction product of at least one macromer with at least one $C_{4-30}$-alkyl(meth)acrylate in at least one polyether polyol 1.

A macromer is defined as a molecule which comprises one or more polymerisable double bonds able to polymerise with $C_{4-30}$-alkyl(meth)acrylates and which comprises one or more hydroxyl-terminated polyether chains. Typical macromers comprise polyether polyols having an unsaturated group, which are commonly manufactured by reacting a standard polyether polyol with an organic compound containing an unsaturated group and the reactive group listed above.

The at least one macromer is at least one molecule which comprises in its structure one or more polymerisable double bonds able to copolymerise with $C_{4-30}$-alkyl(meth)acrylates, which comprises in is structure one or more hydroxyl-terminated polyether chains.

The at least one macromer is preferably obtained by reacting at least one polyether polyol 2 with an organic compound containing a polymerisable double bond able to copolymerise with $C_{4-30}$-alkyl(meth)acrylates and a carboxyl, anhydride, isocyanate, epoxy or other functional group able to react with an active hydrogen-containing group.

The molar ratio of polymerisable double bonds to hydroxyl groups of the polyether polyol 2 to be reacted is preferably in the range of from 0.03 to 0.30, more preferably 0.06 to 0.23, most preferably 0.10 to 0.16, for example about 0.13.

The organic compound containing a polymerisable double bond able to copolymerise with $C_{4-30}$-alkyl(meth)acrylates and a carboxyl, anhydride, isocyanate, epoxy or other functional group able to react with an active hydrogen-containing group is preferably selected from isocyanatoethyl methylacrylate (IEM), 1,1-dimethyl meta-isopropenyl benzylisocyanate (TMI) or mixtures thereof.

In a preferred embodiment of this invention TMI is used for manufacturing the macromer.

Usually, macromers are synthesised in the presence of Lewis acid catalysts.

The suitable Lewis acid catalysts generally comprise tin-based, boron-based, aluminium-based, gallium-based, rare earth-based, zinc-based, or titanium-based compounds.

Representative tin-based compounds include: Dibutyltin diacetate, Dibutyltin, dibromide, Dibutyltin dichloride, Dibutyltin dilaurate, Dibutyltin dimethoxide, Dibutyltin oxide, Dimethyltin diacetate, Dimethyltin dibromide, Diphenyltin dichloride, Diphenyltin oxide, Methyltin trichloride, Phenyltin trichloride, Tin(IV) acetate, Tin(IV) bromide, Tin(IV) chloride, Tin(IV) iodide, Tin(II) oxide, Tin(II) acetate, Tin(II) bromide, Tin(II) chloride, Tin(II) iodide, and Tin(II) 2-ethylhexanoate (stannous octoate). Representative boron-based compounds include: Boron tribromide, Boron trichloride, Boron trifluoride, and tris(pentafluorophenyl)borane. Representative aluminium-based compounds include: Aluminium chloride and Aluminium bromide. Representative gallium-based compounds include: Gallium chloride, Gallium bromide, and Gallium(III) actylacetonate.

Representative rare earth catalysts are generally salts of Scandium, Yttrium, Lanthanum, Praseodymium, Neodymium, Erbium, Thulium, Ytterbium, Neodymium or Lutetium. Examples include: Ytterbium triflate, Ytterbium(III) actylacetonate, Erbium(III) trifluorosulfonate (erbium triflate), Erbium(III) actylacetonate, Holmium triflate, Terbium triflate, Europium triflate, Europium(III) trifluoroacetate, Samarium triflate, Neodymium triflate, Neodymium(III) actylacetonate, Praseodymium triflate, Lanthanum triflate, and Dysprosium triflate. Representative zinc-based compounds include Zinc chloride and Zinc bromide. Representative titanium compounds include Titanium(IV) bromide and Titanium(IV) chloride.

A number of methods for inducing reactive unsaturation into a polyol are known in the art. The synthesis of useful macromers is described in WO2005/003200. Macromer A is a product obtained by reaction of a three-functional polyether polyol with 1,1-dimethyl meta-isopropenyl benzyl isocyanate (TMI). Macromer B is a product obtained by reaction of a six-functional polyether polyol with 1,1-dimethyl meta-isopropenyl benzyl isocyanate (TMI).

Preferably, the stabiliser is based on a two- to eight-functional, more preferably three- to six-functional polyether polyol 1.

The molecular weight of ($M_n$) of the polyether polyol 1 is preferably in the range from 5,000 to 30,000 g/mol, more preferably 10,000 to 25,000 g/mol, most preferably 15,000 to 20,000 g/mol. The more preferred molecular weight ($M_n$) is about 80,000 g/mol. The molecular weight is preferably determined by gel permeation chromatography using Polystyrene as standard and THF as eluent/solvent.

The polyether polyols 1 and 2 can be the same or different.

According to one embodiment of the invention, polyether polyols 1 and 2 are the same. According to a second, more preferred embodiment, polyether polyol 2 is a six-functional polyether polyol and polyether polyol 1 is a three-functional polyether polyol. The molecular weights can be in the above-mentioned range.

When a six-functional polyol is employed in the polyether polyol 2, the molar ratio of TMI to polyether polyol is preferably 0.2 to 1.8, more preferably 0.4 to 1.4, most preferably 0.6 to 1.0, for example about 0.8.

The polyether polyols 1, 2 and 3 employed according to the present invention are prepared by known methods, for example from one or more alkylene oxides having from 2 to 4 carbon atoms in the alkylene radical by anionic polymerization using alkali metal hydroxides or alkali metal alkoxides as catalysts with addition of at least one polyol starter molecule, or by cationic polymerization using Lewis acids, such as antimony pentachloride or boron fluoride etherate. Suitable alkylene oxides are, for example, tetrahydrofuran, 1,3-propylene, oxide, 1,2- or 2,3-butylene oxide and preferably ethylene oxide and 1,2-propylene oxide.

Furthermore multi-metal cyanide compounds, known as DMC catalysts, can also be used as catalysts. The alkylene oxides can be used individually, alternately or in succession or as a mixture. Preference is given to mixtures of 1,2-propylene oxide and ethylene oxide, with the ethylene oxide being used in amounts of from 10 to 50 % as ethylene oxide and block ("EO cap"), so that the polyols formed have more than 70 % primary OH end groups.

Possible starter molecules are two- to eight-functional alcohols, such as ethylene glycol, 1,2-and 1,3-propane diol, diethylene glycol, dipropylene glycol, 1,4-butane diol, glycerol or dimethylol propane, sugars, sorbitol or pentaeritritol.

The stabiliser according to the invention may also be named preformed stabiliser.

EP-A 1 675 885 gives a definition of the term preformed stabilisers:

A pre-formed stabiliser (PFS) is particularly useful for preparing a polymer polyol having a lower viscosity at a high solid content. In the pre-formed stabiliser processes, a macromer is reacted with monomers to form a co-polymer composed of macromer and monomers. These copolymers comprising a macromer and monomers are commonly referred to as pre-formed stabilisers (PFS). Reaction conditions may be controlled such that a portion of the co-polymer precipitates from solution to form a solid. In many applications, a dispersion having a low solids content (e.g., 3 to 15 wt%) is obtained. Preferably, the reaction conditions are controlled such that the particle size is small, thereby enabling the particles to function as "seeds" in the polymer polyol reaction.

As explained above, preformed stabilisers (PFS) are in principle known in the art for processes to form a dispersion by radical polymerization. However, the requirements for stabilisers to be used in the melt emulsification process are different (even though the manufacturing of the stabilisers may be similar).

The melt emulsification process involves only physical mixing of the components, rather than a chemical reaction. In the conventional methods (radical polymerization), the PFS or macromers are added during the radical polymerization. Thus, the residence times are different, and there is no post-polymerization or further polymer chain growth in the melt emulsification process.

The macromers used for synthesizing the inventive stabiliser usually have functional groups that are assumed to interact with the polyols of the polymer polyol product to be stabilised and can react with the isocyanate during the PU reaction. This process improves the integration of graft particles in the PU network.

The inventive stabilisers usually have a viscosity in the range between 1000 to 100.000 mPas, preferably 5000 to 80.000 mPas, more preferably 8000 to 60.000 mPas at 25 °C.

The viscosity of the polyols is, unless indicated otherwise, determined at 25°C in accordance with DIN EN ISO 3219 from 1994 by means of a Rheotec RC20 rotational viscometer using the spindle CC 25 DIN (spindle diameter: 12.5 mm; internal diameter of measuring cylinder: 13.56 mm), however at a shear rate of 100 /1 s (instead of 50/1 s).

The inventive stabilisers usually have an OH number of 1 to 100, preferably 1 to 50 mg KOH/g, more preferentially 10 to 40 mg KOH/g.

The hydroxyl number is determined in accordance with DIN 53240 from 2012 (DIN = "Deutsche Industrienorm", i.e. German industry standard).

For preparing the macromers, $C_{4-30}$-alkyl(meth)acrylates are employed. The alkyl acrylates are preferred over the alkyl(meth)acrylates. Preferably are $C_{6-28}$-, more preferably $C_{10-26}$-, most preferably $C_{17-22}$-alkyl acrylates are employed. Examples are $C_{22}$-, $C_{18}$- and $C_{17}$-alkyl acrylates. The alkyl residue can be linear or branched and is preferably linear. Especially preferred is behenyl acrylate.

The $C_{4-30}$-alkyl(meth)acrylate can be employed together with acrylonitrile, styrene or a mixture thereof. It is also possible that the reaction product of the at least one macromer with the at least one $C_{4-30}$-alkyl(meth)acrylate is free from polymerised acrylonitrile and styrene units. Specifically, the products which are free from polymerised acrylonitrile and styrene units differ significantly from the stabilisers disclosed in WO 2015/165878. The amount of the at least one $C_{4-30}$-alkyl(meth)acrylate is preferably 5 to 50 wt%, more preferably 10 to 35 wt%, most preferably 20 to 25 wt%, for example about 22.5 wt%, based on the total amount of the stabiliser, which is 100 wt%.

If employed, the total amount of $C_{4-30}$-alkyl(meth)acrylate, acrylonitrile and styrene is in the range from 5 to 90 wt%, more preferably 10 to 50 wt%, most preferably 20 to 40 wt%, based on the total amount of the stabiliser, which is 100 wt%.

The weight ratio of the reaction product of at least one macromer with at least one $C_{4-30}$-alkyl(meth)acrylate to the at least one polyether polyol 1 is in the range of from 20:80 to 80:20, preferably 50:50 to 70:30, for example about 60:40.

The synthesis of the inventive stabilisers described herein is usually carried out by reacting a macromer or a mixture of macromers with $C_{4-30}$-alkyl(meth)acrylate and optionally styrene and acrylonitrile in a carrier polyol (polyether polyol 1) in the presence of a radical initiator and optionally a chain transfer agent in a free radical polymerization. This reaction is usually carried out in a semi-batch process; however a batch procedure or a continuous process is also possible. The monomers, the macromer or the macromer mixture, the carrier polyol, the initiator or the chain transfer agent can be added to the reactor before, during or after the reaction, continuously or stepwise.

Different radical initiators can be used, for example azo derivatives, such as AIBN, peroxides such as tert-amyl peroxides, hydroperoxides and percarbonates. Most preferred are azo derivatives, in particular AIBN (azoisobutyro nitrile) and/or dimethyl 2,2,-azobis(2-methylpropionate).

The inventive stabilisers may be used to stabilise polymer polyol dispersions, in particular polymer polyol dispersions produced by melt emulsification.

In a preferred embodiment, the obtained polymer polyol dispersion when using the inventive stabiliser has a solid content of 10 to 50 wt%, preferably 30 to 46 wt%, a viscosity of 1000 to 20000 mPas, preferably 3000 to 15000 mPas, more preferably 5000 to 12000 mPas at 25 °C and a shear rate of 100 to 1/s.

In order to determine the solid content, a polymer polyol sample is added into a centrifugal tube where it is diluted with solvent and fully shaken up; the mixture is centrifugally separated on a high-speed centrifuge, and the supernatant will be removed from the centrifugal tube by pouring; the whole process mentioned above will be repeated at least twice, and then the centrifugal tube filled with sample is put into a vacuum oven for drying; after it is cooled down to the room temperature, solid remained in the centrifugal tube will be weighed to calculate the solid content in the sample.

The inventive stabilisers have a particle size D50 smaller than 0,5 μm, prefer-entially smaller than 0,3 μm (as determined by static laser diffraction using a Mastersizer 2000 (Malvern Instruments Ltd) after dilution of the sample with isopropanol in order to obtain an optical concentration suitable for the measurement. For the dispersion of the sample a dispersing module Hydro SM was used with a stirrer speed of 2500 rpm. The calculation of the particle size distribution may be performed by the Mastersizer 2000 using Fraunhofer theory).

The molecular weight of a polyol in general may be calculated by the following formula:

$$Mn = f \times 56100/OH\text{-value},$$

wherein Mn = number average molecular weight in g/mol, f= functionality, the number of OH groups per molecule, determined by the starter used to synthesise the macromer, OH-value = hydroxyl number of oligo-polyol in mg KOH/g.

The stabiliser according to the present invention is used for the stabilization of polymer polyol dispersions produced by melt emulsification. Specifically, polyolefins are stabilised in polyether polyols 3.

The polyolefins are preferably selected from polyethylene, polypropylene, polybutylene, polyisobutylene, polybutadiene (which might be partially hydrogenated) and mixtures thereof and copolymers thereof or - less preferred - their copolymers with other monomers which can be copolymerised therewith.

Usually, the molecular weight ($M_n$) of the polyolefin is in the range of from 500 to 1000000, more preferably from 750 to 500000, most preferentially 1000 to 100000.

In the dispersion of the at least one polyolefin in at least one polyol 3, comprising at least one stabiliser as defined herein, polyol 3 can be the same as polyether polyol 1 and/or polyether polyol 2.

The dispersion preferably comprises 5 to 20 wt%, more preferably 7 to 15 wt%, for example about 10 wt%, of the at least one stabiliser and 10 to 60 wt%, more preferably 10 to 50 wt%, for example about 40 wt% of the at least one polyolefin, based on the total amount of the dispersion, which is 100 wt%.

The remainder of the dispersion is typically the polyol 3.

For preparing this dispersion, a melt emulsification of the at least one polyolefin, the at least one polyol 3 and the at least one stabiliser is performed.

The melt emulsification is preferably performed in an extruder at a temperature in the range of from 140 to 240 °C, more preferably 155 to 220 °C, most preferably 170 to 190 °C, for example about 180 °C. Alternatively, the melt emulsification may be performed in a kneader, at a temperature in the range from 180 to 260 °C, more preferably 210 to 255 °C, most preferably 230 to 250 °C, for example about 240 °C.

The polymer polyol dispersion stabilised by using at least one inventive stabiliser may be used for the production of polyurethanes (PU).

Usually, in the production of polyurethanes, at least one polyol is reacted with at least one polyisocyanate, optionally in the presence of at least one blowing agent and/ or catalyst.

A typical A-component in this PU production process consists of one or more polyols, one or more polyurethane catalysts, one or more surfactants, one or more crosslinkers, water or optionally other chemical or physical blowing agents. The B-component usually contains the isocyanates.

In another embodiment of the present invention, the polymer polyol comprising the inventive stabiliser may also be used to obtain a stable A-component in a PU production process, such that the A-component may be stored for a prolonged time without phase separation.

Examples:

In the following sections, some experimental examples are given in order to illustrate some aspects of the present invention.

Example 1

Preformed stabiliser

A three litre reactor was charged with a polyol mixture of polyol Lupranol® 2095 (trifunctional polyetherol with primary OH endgroups based on glycerol with MW 5000 by BASF SE) and a six functional polyetherol modified with 3-isopropenyl-$\alpha,\alpha$-dimethylbenzene isocyanate (1 mol per mole polyetherol). The mass ratio of the polyetherols was 29:47.5. Furthermore, 22.5 wt% behenyl acrylate, 0.5 wt% dodecanthiol and 0.5 wt% dimethyl-2,2'-azobis(2-methylpropionate) were added to this solution. The solution was heated to 70 °C and stirred for 20 h.

Example 2

Dispersion of Polyisobutylene MW 1,000 g/mol (laboratory batch process)

A 700 mL glass reactor is charged with 250 g polyol Lupranol® 2095 (trifunctional polyetherol with primary OH endgroups based on glycerol with MW 5000 by BASF SE), 50 g preformed stabiliser and 200 g polyisobutylene with molecular weight 1,000 g/mol (Glissopal® 1000 by BASF). The reaction mixture was heated to 240 °C and stirred at 600 rpm for 2 h. A white viscous solution was yielded. The viscosity of the product was 6630 mPas (1/50 1/s at 25 °C) and a particle diameter of D[3,2] 1.566 $\mu$m was determined. The product was phase stable for at least several weeks.

Example 3

Dispersion of Polyisobutylene MW 1,000 g/mol (large-scale melt emulsification)

A dispersion of 40 wt% polyisobutylene (MW 1000 g/mol) in 50wt% polyetherol GEP330NY by Gaoqiao Sinopec (trifunctional polyetherol with primary OH endgroups based on glycerol with MW 5000) was prepared by melt emulsification process. Preformed stabiliser (10 wt%) was added during the process. The extruder zones were heated to following temperatures: 25 °C (zone 1), 180 °C (zone 2-10) and the head of the extruder was heated to 180 °C. The speed of the extruder was adjusted to 800 rpm and the material was fed into zone 2 with 60 kg/h. A rotor-stator was attached to the extruder head (4,000 rpm). A viscosity of 4175 mPas and mean particle size of 5.276 $\mu$m was determined for the phase-stable product and the product was stable for at least several weeks.

Example 4

Dispersion of Polyisobutylene MW 2.300 g/mol (laboratory batch process)

A 700 mL glass reactor is precharged with 50 g preformed stabiliser and 200 g polyisobutylene with molecular weight 2,300 g/mol (Glissopal® 2300 by BASF). The reaction mixture was heated to 240 °C and stirred at 600 rpm. 250 g polyol Lupranol® 2095 (trifunctional polyetherol with primary OH endgroups based on glycerol with MW 5000 by BASF SE) was slowly added to the reaction mixture followed by 1 h stirring at reaction temperature. A white viscous solution was yielded. The viscosity of the product was 654 mPas (1/50 1/s at 75 °C) and a particle diameter of D[3,2] 2.667 $\mu$m was determined. The product was phase stable for at least several weeks.

Example 5

Dispersion of Polyisobutylene MW 2,300 g/mol (large-scale melt emulsification)

A dispersion of 40 wt% polyisobutylene (MW 2300 g/mol) in 50 wt% polyetherol GEP330NY by Gaoqiao Sinopec (trifunctional polyetherol with primary OH endgroups based on glycerol with MW 5000) was prepared by melt emulsification process. Preformed stabiliser (10 wt%) was added during the process. The extruder zones were heated to following temperatures: 25 °C (zone 1), 170 °C (zone 2-10) and the head of the extruder was heated to 170 °C. The speed of the extruder was adjusted to 800 rpm and the material was fed into zone 2 with 60 kg/h. A rotor-stator was attached to the extruder head (8,000 rpm). A viscosity of 3049 mPas and mean particle size of 4.507 $\mu$m was determined for the phase-stable product and the product was stable for at least several weeks.

Example 6

Dispersion of Polyisobutylene MW 20,000 g/mol (laboratory batch process)

A 700 mL glass reactor is precharged with 50 g preformed stabiliser and 200 g polyisobutylene with molecular weight 20,000 g/mol (Oppanol B10 by BASF). The reaction mixture was heated to 240 °C and stirred at 600 rpm. 250 g polyol Lupranol® 2095 (trifunctional polyetherol with primary OH endgroups based on glycerol with MW 5000 by BASF SE) was slowly added to the reaction mixture followed by 1 h stirring at reaction temperature. A white dispersion was yielded. The viscosity of the product was 10590 mPas (1/50 1/s at 25 °C) and a particle diameter of D[3,2] 2.284 $\mu$m was determined. The product was phase stable for at least several weeks.

Example 7

Dispersion of Polypropylene MW 20,000 g/mol (laboratory batch process)

A 700 mL glass reactor is charged with 160 g bifunctional polyetherol polyol Lupranol® 1100 (bifunctional polyetherol with secondary OH endgroups with MW 1000 by BASF SE), 80 g preformed stabiliser and 160 g polypropylene with molecular weight 20,000 g/mol by Sigma Aldrich. The reaction mixture was heated to 240 °C and stirred at 400 rpm for 1 h. A white viscous solution was yielded. The viscosity of the product was 6853 mPas (1/100 1/s at 75 °C) and a particle diameter of D[3,2] 2.643 $\mu$m was determined. The product was phase stable.

**Claims**

1. Stabiliser, comprising the reaction product of at least one macromer with at least one $C_{4-30}$-alkyl(meth)acrylate in at least one polyether polyol 1 in the presence of at least one free radical polymerisation catalyst and optionally at least one chain transfer agent,
   the at least one macromer being at least one molecule which comprises in its structure one or more polymerisable double bonds, able to copolymerise with $C_{4-30}$-alkyl(meth)acrylates and which furthermore comprises in its structure one or more hydroxyl-terminated polyether chains,
   wherein the weight ratio of the reaction product of at least one macromer with at least one $C_{4-30}$-alkyl(meth)acrylate to the at least one polyether polyol 1 is in the range of from 20:80 to 80:20, wherein the stabiliser has a particle size D50 smaller than 0.5 μm as determined by static laser diffraction using a Mastersizer 2000 (Malvern Instruments Ltd) after dilution of the sample with isopropanol in order to obtain an optical concentration suitable for the measurement.

2. The stabiliser according to claim 1, wherein the weight ratio of the reaction product of at least one macromer with at least one $C_{4-30}$-alkyl(meth)acrylate to the at least one polyether polyol 1 is in the range of from 50:50 to 70:30.

3. The stabiliser according to claim 1 or 2, wherein the amount of the at least one $C_{4-30}$-alkyl(meth)acrylate is 5 to 50 wt%, based on the total amount of the stabiliser, which is 100 wt%.

4. The stabiliser according to one of claims 1 to 3, wherein the at least one $C_{4-30}$-alkyl(meth)acrylate is employed together with acrylonitrile, styrene, or a mixture thereof.

5. The stabiliser according to one of claims 1 to 3, wherein the reaction product of at least one macromer with at least one $C_{4-30}$-alkyl(meth)acrylate is free from polymerised acrylonitrile and styrene units.

6. The stabiliser according to one of claims 1 to 5, wherein the at least one macromer is obtained by reacting at least one polyether polyol 2 with an organic compound containing a polymerisable double bond able to copolymerise with $C_{4-30}$-alkyl(meth)acrylate and a carboxyl, anhydride, isocyanate, epoxy or other functional group able to react with an active hydrogen-containing group, the molar ratio of polymerisable double bonds to hydroxyl groups of the polyether polyol 2 to be reacted being in the range of from 0.03 to 0.30.

7. The stabiliser according to claim 6, wherein the organic compound containing a polymerisable double bond able to copolymerise with $C_{4-30}$-alkyl(meth)acrylates and a carboxyl, anhydride, isocyanate, epoxy or other functional group able to react with an active hydrogen-containing group is selected from isocyanate ethyl methyl acrylate (IEM), 1,1-dimethyl meta-isopropenyl benzyl isocyanate (TMI) and mixtures thereof.

8. The stabiliser according to one of claims 6 or 7, wherein the at least one polyether polyol 1 and 2 are selected from two- to eight-functional, preferably three- to six-functional polyether polyols of a molecular weight ($M_n$) of from 500 to 30,000 g/mol, preferably 10,000 to 25,000 g/mol.

9. The stabiliser according to claim 8, wherein the polyether polyols 1 and 2 are the same.

10. The stabiliser according to claim 8, wherein polyether polyol 2 is a six-functional polyether polyol and polyether polyol 1 is a three-functional polyether polyol.

11. A process for preparing the stabiliser according to one of claims 1 to 10, comprising reacting the at least one macromer with at least one $C_{4-30}$-alkyl(meth)acrylate in at least one polyether polyol 1 in the presence of a free radical polymerisation catalyst and optionally at least one chain transfer agent.

12. The use of the stabiliser according to one of claims 1 to 10 for the stabilization of polymer polyol dispersions produced by melt emulsification.

13. The use according to claim 12, wherein polyolefins are stabilised in polyols.

14. A process for preparing a dispersion of at least one polyolefin in at least one polyol 3, comprising at least one stabiliser according to one of claims 1 to 10, comprising the melt emulsification of the at least one polyolefin, the at least one polyol 3 and the at least one stabiliser.

15. The process according to claim 14, wherein the at least one polyolefin is selected from polyethylene, polypropylene, polybutylene, polyisobutylene, polybutadiene and mixtures thereof.

16. The process according to one of claims 14 or 15, wherein the at least one polyol 3 is selected from two- to eight-functional, preferably three- to six-functional polyols of a molecular weight ($M_n$) of from 500 to 30,000 g/mol, preferably 1,000 to 10,000 g/mol and may be the same as polyether polyol 1.

17. The process according to one of claims 14 to 16, wherein polyol 3 is selected from the group of polyetherols. e.g. polyether polyols, polyesterols, polycarbonate polyols, polyether amines, hydroxyl-functionalised fatty acid derivatives and alkoxylation products of the before mentioned groups and mixtures thereof.

18. The process according to one of claims 14 to 17, wherein the dispersion comprises 5 to 20 wt% of the at least one stabiliser and 10 to 60 wt% of the at least one polyolefin, based on the total amount of the dispersion, which is 100 wt%.

19. The process according to claim 14, wherein the melt emulsification is performed in an extruder at a temperature in the range of from 140 to 240 °C or in a kneader at a temperature in the range from 180 to 260 °C.

20. A process for preparing a polyurethane, comprising preparing a dispersion of at least one polyolefin in at least one polyol 3, comprising at least one stabiliser according to one of claims 1 to 10, comprising the melt emulsification of the at least one polyolefin, the at least one polyol 3 and the least one stabiliser, mixing the dispersion with polyisocyanates and, if appropriate, one or more of further compounds having hydrogen atoms which are reactive towards isocyanates, chain extenders and/or crosslinkers, catalysts, blowing agents and further additives, and reacting the mixture to form the polyurethane.

21. The process according to claim 20, wherein the polyurethane is a polyurethane foam and the mixture comprises blowing agents.

22. The process according to claim 20, wherein the polyurethane is a compact polyurethane material.


**Patentansprüche**

1. Stabilisator, umfassend das Reaktionsprodukt von mindestens einem Makromer mit mindestens einem $C_{4-30}$-Alkyl (meth) acrylat in mindestens einem Polyetherpolyol 1 in Gegenwart mindestens eines Katalysators für die radikalische Polymerisation und gegebenenfalls mindestens eines Kettenübertragungsmittels,
wobei es sich bei dem mindestens einen Makromer um mindestens ein Molekül handelt, das in seiner Struktur eine oder mehrere polymerisierbare Doppelbindungen umfasst, mit $C_{4-30}$-Alkyl (meth) - acrylaten copolymerisierbar ist und ferner in seiner Struktur eine oder mehrere hydroxylterminierte Polyetherketten umfasst,
wobei das Gewichtsverhältnis des Reaktionsprodukts von mindestens einem Makromer mit mindestens einem $C_{4-30}$-Alkyl (meth) acrylat zu dem mindestens einen Polyetherpolyol 1 im Bereich von 20:80 bis 80:20 liegt, wobei der Stabilisator eine Teilchengröße D50 von weniger als 0,5 $\mu$m gemäß Bestimmung durch statische Laserbeugung unter Verwendung eines Mastersizer 2000 (Malvern Instruments Ltd) nach Verdünnung der Probe mit Isopropanol zum Erhalt einer für die Messung geeigneten optischen Konzentration aufweist.

2. Stabilisator nach Anspruch 1, wobei das Gewichtsverhältnis des Reaktionsprodukts von mindestens einem Makromer mit mindestens einem $C_{4-30}$-Alkyl-(meth)acrylat zu dem mindestens einen Polyetherpolyol 1 im Bereich von 50:50 bis 70:30 liegt.

3. Stabilisator nach Anspruch 1 oder 2, wobei die Menge des mindestens einen $C_{4-30}$-Alkyl(meth)acrylats 5 bis 50 Gew.-% beträgt, bezogen auf die Gesamtmenge des Stabilisators, die 100 Gew.-% beträgt.

4. Stabilisator nach einem der Ansprüche 1 bis 3, wobei das mindestens eine $C_{4-30}$-Alkyl (meth) acrylat zusammen mit Acrylnitril, Styrol oder einer Mischung davon eingesetzt wird.

5. Stabilisator nach einem der Ansprüche 1 bis 3, wobei das Reaktionsprodukt von mindestens einem Makromer mit mindestens einem $C_{4-30}$-Alkyl (meth) - acrylat frei von einpolymerisierten Acrylnitril-und Styroleinheiten ist.

6. Stabilisator nach einem der Ansprüche 1 bis 5, wobei das mindestens eine Makromer durch Umsetzung mindestens eines Polyetherpolyols 2 mit einer organischen Verbindung mit einer polymerisierbaren Doppelbindung, die mit $C_{4-30}$-Alkyl (meth) acrylat copolymerisierbar ist, und einer Carboxyl-, Anhydrid-, Isocyanat-, Epoxid- oder anderen funktionellen Gruppe, die mit einer aktiven Wasserstoff enthaltenden Gruppe reagieren kann, erhalten wird, wobei das Molverhältnis von polymerisierbaren Doppelbindungen zu umzusetzenden Hydroxylgruppen des Polyetherpolyols 2 im Bereich von 0,03 bis 0,30 liegt.

7. Stabilisator nach Anspruch 6, wobei die organische Verbindung mit einer polymerisierbaren Doppelbindung, die mit $C_{4-30}$-Alkyl (meth) acrylaten copolymerisierbar ist, und einer Carboxyl-, Anhydrid-, Isocyanat-, Epoxid- oder anderen funktionellen Gruppe, die mit einer aktiven Wasserstoff enthaltenden Gruppe reagieren kann, aus Isocyanatoethylmethylacrylat (IEM), 1,1-Dimethyl-metaisopropenylbenzylisocyanat (TMI) und Mischungen davon ausgewählt ist.

8. Stabilisator nach einem der Ansprüche 6 oder 7, wobei das mindestens eine Polyetherpolyol 1 und 2 aus zwei- bis achtfunktionellen, vorzugsweise drei- bis sechsfunktionellen, Polyetherpolyolen mit einem Molekulargewicht ($M_n$) von 500 bis 30.000 g/mol, vorzugsweise 10.000 bis 25.000 g/mol, ausgewählt sind.

9. Stabilisator nach Anspruch 8, wobei die Polyetherpolyole 1 und 2 gleich sind.

10. Stabilisator nach Anspruch 8, wobei es sich bei dem Polyetherpolyol 2 um ein sechsfunktionelles Polyetherpolyol handelt und es sich bei dem Polyetherpolyol 1 um ein dreifunktionelles Polyetherpolyol handelt.

11. Verfahren zur Herstellung des Stabilisators nach einem der Ansprüche 1 bis 10, umfassend das Umsetzen des mindestens einen Makromers mit mindestens einem $C_{4-30}$-Alkyl (meth) acrylat in mindestens einem Polyetherpolyol 1 in Gegenwart eines Katalysators für die radikalische Polymerisation und gegebenenfalls mindestens eines Kettenübertragungsmittels.

12. Verwendung des Stabilisators nach einem der Ansprüche 1 bis 10 zur Stabilisierung von durch Schmelzeemulgierung hergestellten Polymerpolyoldispersionen.

13. Verwendung nach Anspruch 12, wobei Polyolefine in Polyolen stabilisiert werden.

14. Verfahren zur Herstellung einer Dispersion von mindestens einem Polyolefin in mindestens einem Polyol 3, das mindestens einen Stabilisator nach einem der Ansprüche 1 bis 10 umfasst, umfassend die Schmelzeemulgierung des mindestens einen Polyolefins, des mindestens einen Polyols 3 und des mindestens einen Stabilisators.

15. Verfahren nach Anspruch 14, wobei das mindestens eine Polyolefin aus Polyethylen, Polypropylen, Polybutylen, Polyisobutylen, Polybutadien und Mischungen davon ausgewählt wird.

16. Verfahren nach einem der Ansprüche 14 oder 15, wobei das mindestens eine Polyol 3 aus zwei- bis achtfunktionellen, vorzugsweise drei- bis sechsfunktionellen, Polyolen mit einem Molekulargewicht ($M_n$) von 500 bis 30.000 g/mol, vorzugsweise 1000 bis 10.000 g/mol, ausgewählt wird und mit Polyetherpolyol 1 identisch sein kann.

17. Verfahren nach einem der Ansprüche 14 bis 16, wobei das Polyol 3 aus der Gruppe der Polyetherole, z. B. Polyetherpolyole, Polyesterole, Polycarbonatpolyole, Polyetheramine, hydroxylfunktionalisierten Fettsäurederivate und Alkoxylierungsprodukte der oben aufgeführten Gruppen und Mischungen davon ausgewählt wird.

18. Verfahren nach einem der Ansprüche 14 bis 17, wobei die Dispersion 5 bis 20 Gew.-% des mindestens einen Stabilisators und 10 bis 60 Gew.-% des mindestens einen Polyolefins umfasst, bezogen auf die Gesamtmenge der Dispersion, die 100 Gew.-% beträgt.

19. Verfahren nach Anspruch 14, wobei die Schmelzeemulgierung in einem Extruder bei einer Temperatur im Bereich von 140 bis 240 °C oder in einem Kneter bei einer Temperatur im Bereich von 180 bis 260 °C durchgeführt wird.

20. Verfahren zur Herstellung eines Polyurethans, umfassend das Herstellen einer Dispersion von mindestens einem Polyolefin in mindestens einem Polyol 3, das mindestens einen Stabilisator nach einem der Ansprüche 1 bis 10 umfasst, umfassend die Schmelzeemulgierung des mindestens einen Polyolefins, des mindestens einen Polyols 3 und des mindestens einen Stabilisators, das Mischen der Dispersion mit Polyisocyanaten und gegebenenfalls einer oder mehreren weiteren Verbindungen mit Wasserstoffatomen, die gegenüber Isocyanaten reaktiv sind, Kettenverlängerungsmitteln und/oder Vernetzern, Katalysatoren, Treibmitteln und weiteren Additiven und das Umsetzen der Mischung zur Bildung des Polyurethans.

21. Verfahren nach Anspruch 20, wobei es sich bei dem Polyurethan um einen Polyurethan-Schaumstoff handelt und die Mischung Treibmittel umfasst.

22. Verfahren nach Anspruch 20, wobei es sich bei dem Polyurethan um ein kompaktes Polyurethanmaterial handelt.

## Revendications

1. Stabilisant, comprenant le produit de réaction d'au moins un macromère avec au moins un (méth)acrylate d'alkyle en $C_{4-30}$ en au moins un polyéther polyol 1 en présence d'au moins un catalyseur de polymérisation radicalaire et facultativement au moins un agent de transfert de chaîne, l'au moins un macromère étant au moins une molécule qui comprend dans sa structure une ou plusieurs doubles liaisons polymérisables, capables de se copolymériser avec des (méth) acrylates d'alkyle en $C_{4-30}$ et qui comprend en outre dans sa structure une ou plusieurs chaînes de polyéther à terminaison hydroxyle, dans lequel le rapport en poids du produit de réaction d'au moins un macromère avec au moins un (méth)acrylate d'alkyle en $C_{4-30}$ à l'au moins un polyéther polyol 1 est dans la plage de 20:80 à 80:20, dans lequel le stabilisant a une taille de particule D50 inférieure à 0,5 $\mu$m telle que déterminée par diffraction laser statique au moyen d'un Mastersizer 2000 (Malvern Instruments Ltd) après dilution de l'échantillon avec de l'isopropanol afin d'obtenir une concentration optique adaptée pour la mesure.

2. Stabilisant selon la revendication 1, dans lequel le rapport en poids du produit de réaction d'au moins un macromère avec au moins un (méth)acrylate d'alkyle en $C_{4-30}$ à l'au moins un polyéther polyol 1 est dans la plage de 50:50 à 70:30.

3. Stabilisant selon la revendication 1 ou 2, dans lequel la quantité de l'au moins un (méth)acrylate d'alkyle

en $C_{4-30}$ est de 5 à 50 % en poids, sur la base de la quantité totale du stabilisant, qui est 100 % en poids.

4. Stabilisant selon l'une des revendications 1 à 3, dans lequel l'au moins un (méth) acrylate d'alkyle en $C_{4-30}$ est utilisé conjointement avec l'acrylonitrile, le styrène, ou un mélange de ceux-ci.

5. Stabilisant selon l'une des revendications 1 à 3, dans lequel le produit de réaction d'au moins un macromère avec au moins un (méth)acrylate d'alkyle en $C_{4-30}$ est exempt de motifs d'acrylonitrile et de styrène polymérisés.

6. Stabilisant selon l'une des revendications 1 à 5, dans lequel l'au moins un macromère est obtenu par réaction d'au moins un polyéther polyol 2 avec un composé organique contenant une double liaison polymérisable capable de se copolymériser avec un (méth)acrylate d'alkyle en $C_{4-30}$ et un groupe fonctionnel carboxyle, anhydride, isocyanate, époxy ou un autre groupe fonctionnel capable de réagir avec un groupe contenant un hydrogène actif, le rapport molaire de doubles liaisons polymérisables aux groupes polymérisables du polyéther polyol 2 devant réagir étant dans la plage de 0,03 à 0,30.

7. Stabilisant selon la revendication 6, dans lequel le composé organique contenant une double liaison polymérisable pouvant se copolymériser avec des (méth) acrylates d'alkyle en $C_{4-30}$ et un groupe carboxyle, anhydride, isocyanate, époxy ou un autre groupe fonctionnel capable de réagir avec un groupe contenant un hydrogène actif est choisi parmi l'éthylméthylacrylate d'isocyanate (IEM), l'isocyanate de 1,1-diméthyl-méta-isopropénylbenzyle (TMI) et des mélanges de ceux-ci.

8. Stabilisant selon l'une des revendications 6 ou 7, dans lequel l'au moins un polyéther polyol 1 et 2 est choisi parmi polyéther polyols de deux à huit fonctions, de préférence de trois à six fonctions ayant un poids moléculaire ($M_n$) de 500 à 30 000 g/mol, de préférence de 10 000 à 25 000 g/mol.

9. Stabilisant selon la revendication 8, dans lequel les polyéther polyols 1 et 2 sont identiques.

10. Stabilisant selon la revendication 8, dans lequel le polyéther polyol 2 est un polyéther polyol à six fonctions et le polyéther polyol 1 est un polyéther polyol à trois fonctions.

11. Procédé de préparation du stabilisant selon l'une des revendications 1 à 10, comprenant la réaction de l'au moins un macromère avec au moins un (méth)acrylate d'alkyle en $C_{4-30}$ dans au moins un polyéther polyol 1 en présence d'un catalyseur de polymérisation radicalaire et facultativement au moins un agent de transfert de chaîne.

12. Utilisation du stabilisant selon l'une des revendications 1 à 10 pour la stabilisation de dispersions de polymère polyol produites par émulsification à l'état fondu.

13. Utilisation selon la revendication 12, dans laquelle des polyoléfines sont stabilisées dans des polyols.

14. Procédé de préparation d'une dispersion d'au moins une polyoléfine dans au moins un polyol 3, comprenant au moins un stabilisant selon l'une des revendications 1 à 10, comprenant l'émulsification à l'état fondu de l'au moins une polyoléfine, l'au moins un polyol 3 et l'au moins un stabilisant.

15. Procédé selon la revendication 14, dans lequel l'au moins une polyoléfine est choisie parmi le polyéthylène, le polypropylène, le polybutylène, le polyisobutylène, le polybutadiène et des mélanges de ceux-ci.

16. Procédé selon l'une des revendications 14 ou 15, dans lequel l'au moins un polyol 3 est choisi parmi des polyols de deux à huit fonctions, de préférence de trois à six fonctions ayant un poids moléculaire ($M_n$) de 500 à 30 000 g/mol, de préférence de 1 000 à 10 000 g/mol et peut être le même que le polyéther polyol 1.

17. Procédé selon l'une des revendications 14 à 16, dans lequel le polyol 3 est choisi dans le groupe des polyéthérols, par exemple des polyéther polyols, des polyestérols, des polycarbonate polyols, des polyéther amines, des dérivés d'acide gras à fonction hydroxyle et des produits d'alcoxylation des groupes mentionnés ci-dessus et des mélanges de ceux-ci.

18. Procédé selon l'une des revendications 14 à 17, dans lequel la dispersion comprend 5 à 20 % en poids de l'au moins un stabilisant et 10 à 60 % en poids de l'au moins une polyoléfine, sur la base de la quantité totale de la dispersion, qui est de 100 % en poids.

19. Procédé selon la revendication 14, dans lequel l'émulsification à l'état fondu est effectuée dans une extrudeuse à une température dans la plage de 140 à 240 °C ou dans un malaxeur à une température dans la plage de 180 à 260 °C.

20. Procédé de préparation d'un polyuréthane, comprenant la préparation d'une dispersion d'au moins une polyoléfine dans au moins un polyol 3, comprenant au moins un stabilisant selon l'une des revendications 1 à 10, comprenant l'émulsification à l'état fondu de l'au moins une polyoléfine, l'au moins un polyol 3 et l'au moins un stabilisant, le mélange de la dispersion avec des polyisocyanates et, le cas échéant, l'un ou plusieurs des composés supplémentaires ayant des atomes d'hydrogène qui sont réactifs avec les isocyanates, des extenseurs de chaîne et/ou des agents de réticulation, des catalyseurs, des agents gonflants et d'autres additifs, et la réaction du mélange pour former le polyuréthane.

21. Procédé selon la revendication 20, dans lequel le polyuréthane est une mousse de polyuréthane et le mélange comprend des agents gonflants.

22. Procédé selon la revendication 20, dans lequel le polyuréthane est un matériau de polyuréthane compact.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1942122 A
- EP 0957130 A
- US 9163099 B
- WO 2015165878 A
- US 20110065840 A
- WO 2009155427 A
- US 6623827 B
- WO 2005003200 A
- EP 1675885 A